# EUROPÄISCHE PATENTSCHRIFT

(11) **EP 0 802 082 B1**
(45) Veröffentlichungstag und Bekanntmachung des Hinweises auf die Patenterteilung: **29.05.2002**
(21) Anmeldenummer: 97102164.7
(22) Anmeldetag: 12.02.1997
(51) Int. Cl.: B60Q 1/52, B60Q 1/00, G01S 7/481

(54) **Kraftfahrzeug mit einem Sende- und/oder Empfangsgerät**
Vehicle with transmitting and/or receiving apparatus
Véhicule avec appareil d'émission et/ou de réception

(30) Priorität: 20.04.1996 DE 19615732
(43) Veröffentlichungstag der Anmeldung: 22.10.1997
(73) Patentinhaber: ROBERT BOSCH GMBH, 70442 Stuttgart (DE)
(72) Erfinder: Schmitz, Stephan, Dr., 70197 Stuttgart (DE); Gaillard, Alain, 76133 Karlsruhe (DE)

(56) Entgegenhaltungen:
- EP-A- 0 526 424
- DE-U- 8 626 907
- FR-A- 2 717 131
- US-A- 3 603 800
- PATENT ABSTRACTS OF JAPAN vol. 017, no. 302 (P-1553), 10.Juni 1993 -& JP 05 027037 A (KANSEI CORP), 5.Februar 1993,

## Beschreibung

Die Erfindung betrifft eine Beleuchtungseinrichtung, die in einer Karosserie eines Kraftfahrzeuges befestigt ist, mit wenigstens einer Lampe und einem Reflektor in einem Lampenraum und einem den Lampenraum nach außen abschließenden Leuchtenglas und mit einem Sende- und/oder Empfangsgerät zum Aussenden und/oder Empfangen spezieller Signalstrahlen, vorzugsweise elektromagnetischer Signalstrahlen.

Es ist bekannt, Kraftfahrzeuge mit Zusatzinstrumenten auszustatten, die der Erstellung von Fahrhilfen für den Fahrer des Kraftfahrzeuges oder von Fahrsteuerungen dienen.
So ist es bekannt, hinter der Windschutzscheibe eines Kraftfahrzeugs einen optischen Sender und Empfänger anzuordnen, der eine kontinuierliche Abstandsmessung zu vorausfahrenden Fahrzeugen vornimmt, um bei einem zu geringen Abstand eine Warnung für den Fahrer zu produzieren oder gar automatisch die Fahrgeschwindigkeit zu drosseln.
Bekannt sind ferner nach dem Radarprinzip arbeitende Abstandsmeßgeräte, die ebenfalls der Abstandsmessung zu vorausfahrenden Fahrzeugen, aber auch als Einparkhilfen o.ä. dienen und daher auch an der Rückseite des Kraftfahrzeugs angebracht sein können.

Die Anbringung des bekannten Geräts hinter der Windschutzscheibe zur Beobachtung des vorausfahrenden Verkehrs hat den Vorteil, dass die Windschutzscheibe durch den Fahrer mit Hilfe der Scheibenwischer gereinigt wird, wenn die Durchsicht durch Verschmutzung, Regen o.ä. gehindert wird. Dies ist naturgemäß für solche Geräte von Bedeutung, deren ausgesandte Strahlen, wie beispielsweise die von optoelektronischen Geräten, durch Verschmutzungen gestreut und/oder in ihrer Intensität gedämpft werden. Der Nachteil dieser Anordnung besteht erkennbar darin, dass an der Windschutzscheibe oder im Bereich der Windschutzscheibe regelmäßig die Durchsicht behinderndes Gerät angebracht werden muss, das darüber hinaus im Fahrgastraum hinderlich sein kann. Darüber hinaus stört die für das Gerät regelmäßig erforderliche Sende- und/oder Empfangsoptik den ästhetischen Eindruck des Kraftfahrzeugs.

Aus der gattungsgemäßen FR 2 717 131 ist eine Lampenvorrichtung für ein Fahrzeug bekannt, in das ein Mikrowellenradar integriert ist. Eine Vorrichtung zur Erzeugung der Mikrowellen ist in einem Bereich der Lampe angeordnet, die sich neben den Reflektoren befindet, in denen die Lampen positioniert sind. Das Deckglas der Lampe weist in dem Bereich vor der Einheit zur Mikrowellenerzeugung eine Fresnellinse auf.

Aus der EP 526 524 A2 ist eine Lichterzeugungseinheit für Fahrzeuge bekannt, in die ein Hinderniserkennungssystem integriert ist, das neben dem Lampenreflektor in dem Lampengehäuse angeordnet ist. Es weist einen Empfänger und einen Sender auf. Hierbei kann die Linse des Hinderniserkennungssystems durch eine Vorrichtung zur Lampenreinigung mit gereinigt werden.

Der Erfindung liegt daher die Problemstellung zugrunde, erforderliche Sende- und/oder Empfangsgeräte so anzuordnen, dass eine Beeinträchtigung der Personen im Fahrgastraum ebenso vermieden wird, wie eine Störung des Gesamteindrucks des Kraftfahrzeugs durch die Sende- und/oder Empfangsgeräte.

Ausgehend von dieser Problemstellung ist ein Kraftfahrzeug der eingangs erwähnten Art dadurch gekennzeichnet, dass das Sende- und/oder Empfangsgerät in dem Lampenraum einer Beleuchtungseinrichtung so angeordnet ist, dass durch das Leuchtenglas der spezielle Signalstrahl aussendbar beziehungsweise empfangbar ist und dass der Lampenraum durch das Leuchtenglas und den Reflektor begrenzt wird.

Erfindungsgemäß wird das Sende- und/oder Empfangsgerät somit in eine Beleuchtungseinrichtung, insbesondere einen Frontscheinwerfer des Kraftfahrzeugs, integriert. Dies bietet den Vorteil, dass für das Sende- und/oder Empfangsgerät kein eigener Platz, insbesondere nicht im Fahrzeuginnenraum, benötigt wird und dass Teile der Beleuchtungseinrichtung für das Sende- und/oder Empfangsgerät ausgenutzt werden, nämlich immer das stabile Leuchtenglas der Beleuchtungseinrichtung, das vorzugsweise durch eine Reinigungseinrichtung auch während der Fahrt saubergehalten werden kann. Bekannte Reinigungseinrichtungen arbeiten dabei mit Scheibenwischern oder mit Wasserstrahlen mit höherem Druck. Gegebenenfalls können auch andere Bestandteile der Beleuchtungseinrichtung, insbesondere zum Aussenden von Signalstrahlen, mitbenutzt werden, wie beispielsweise der Reflektor der Beleuchtungseinrichtung.

Das Sende- und/oder Empfangsgerät kann eine eigene Optik zur Formung des speziellen Signalstrahls aufweisen. In diesem Fall wird das Sende- und/oder Empfangsgerät in den Lampenraum, regelmäßig durch eine eigene Bohrung des Reflektors neben der Lampendurchführung, eingebracht. Die Beleuchtungseinrichtung im übrigen kann dann unverändert bleiben. Alternativ oder zusätzlich ist es aber auch möglich, zusätzliche Strahlformungselemente zu verwenden, vorzugsweise in dem Lampenglas eine Linse zur Formung des speziellen Signalstrahls zu realisieren. Die Linse nimmt dabei zweckmäßigerweise nur einen geringen Anteil der Fläche des Leuchtenglases ein, um die Abstrahlung des Lichts der Beleuchtungseinrichtung nicht merkbar zu stören. Für diese Lösung ist allerdings Voraussetzung, daß die Strahlen durch Glaslinsen in ihrer Form beeinflußbar sind, daß also optische Strahlen oder den optischen Strahlen ähnliche elektromagnetische Strahlen von dem Sende- und/oder Empfangsgerät ausgesandt bzw. empfangen werden.

Unter den gleichen Voraussetzungen kann auch der Reflektor der Beleuchtungseinrichtung zur Unterbringung des Sende- und/oder Empfangsgeräts mit ausgenutzt werden. Dies ist durch eine spezielle zusätzliche Formung des Reflektors im Bereich des Sende- und/oder Empfangsgeräts möglich, kann vorzugsweise aber auch dadurch verwirklicht werden, daß der ausgesandte Signalstrahl durch eine im Lampenraum vorgesehene Reflektionseinrichtung wenigstens teilweise auf den Reflektor im Lampenraum gerichtet wird, insbesondere durch eine Reflektionseinrichtung auf der Fläche des Leuchtenglases. Die Reflektionseinrichtung kann mit einer strahlbündelnden oder strahlstreuenden Reflektorfläche versehen sein und kann in der optischen Achse der Lampe angeordnet und klein gegenüber der Fläche des Leuchtenglases sein, so daß auch durch die Reflektionseinrichtung die'Abstrahlung des normalen Lichts der Beleuchtungseinrichtung nicht oder nicht merklich gestört wird.

Arbeitet das Sende- und/oder Empfangsgerät mit optischen Strahlen, wird naturgemäß eine Beeinflussung durch das Licht der Beleuchtungseinrichtung nicht zu vermeiden sein. Diese wird dadurch verringert, daß das Sende- und/oder Empfangsgerät zum Aussenden und/oder Empfangen eines Signalstrahls mit einem schmalen Frequenzband ausgelegt ist. Zusätzlich kann eine Trägerfrequenz mit den optischen Signalen moduliert sein, wodurch die Beeinflussung durch das Licht der Beleuchtungseinrichtung minimiert wird.

Die Erfindung soll im folgenden anhand von in der Zeichnung dargestellten Ausführungsbeispielen näher erläutert werden. Es zeigen:
- Figur 1 -: einen Schnitt durch eine Beleuchtungseinrichtung mit einem eingesetzten Sende- und/oder Empfangsgerät
- Figur 2 -: eine Darstellung gemäß Figur 1 mit einem modifizierten Leuchtenglas
- Figur 3 -: eine Darstellung gemäß Figur 1 mit einem mit einer Reflektorfläche versehenen Leuchtenglas.

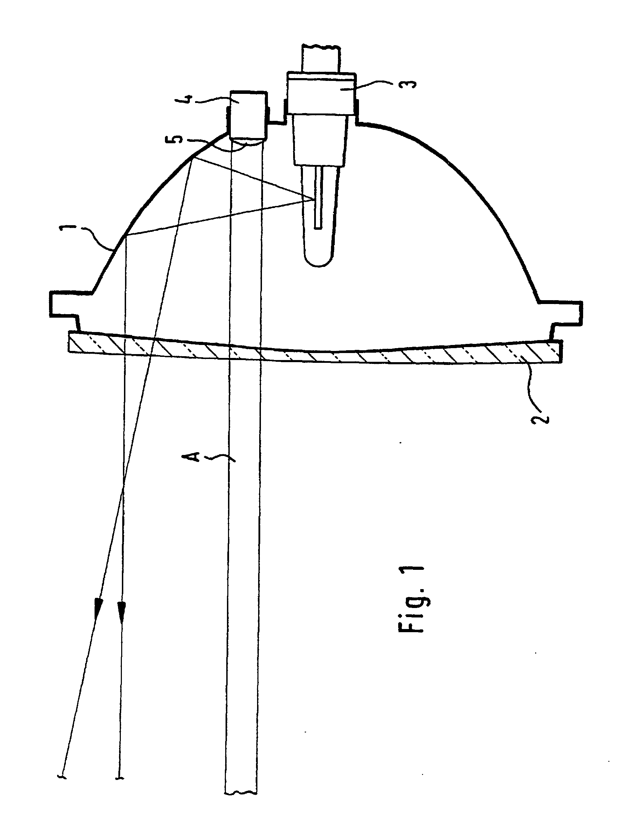

Figur 1 läßt eine Beleuchtungseinrichtung mit einem Reflektor 1, einem Leuchtenglas 2 und einer in den Reflektor 1 eingesetzten Lampe 3 erkennen. Der Reflektor 1 ist so geformt, daß das schematisch mit zwei Strahlen angedeutete ausgesandte Licht der Lampe 3 als ein Scheinwerferstrahl durch das Leuchtenglas 2 hindurchtritt und beispielsweise an der Vorderseite des Autos für die Beleuchtung der Fahrbahn für den Fahrer dient. Das Leuchtenglas 2 kann dabei so geformt sein, daß der ausgesandte Scheinwerferstrahl in einer gewünschten Weise beeinflußt wird.

Nahe neben der Lampe 3 ist in den Reflektor 1 ein Sende- und/oder Empfangsgerät 4 eingesetzt, dessen Abstrahlrichtung bzw. Empfangsrichtung für einen Signalstrahl A durch das Leuchtenglas 2 gerichtet ist und im dargestellten Ausführungsbeispiel parallel zu optischen Achse der Beleuchtungseinrichtung verläuft. Eine Optik 5 des Sende- und/oder Empfangsgeräts 4 sorgt dafür, daß der Strahl A mit einer gewünschten Divergenz, beispielsweise als parallelisierter Strahl ausgesandt wird oder daß der empfangene Strahl A auf einen optischen Sensor im Sende- und/oder Empfangsgerät fokussiert wird.

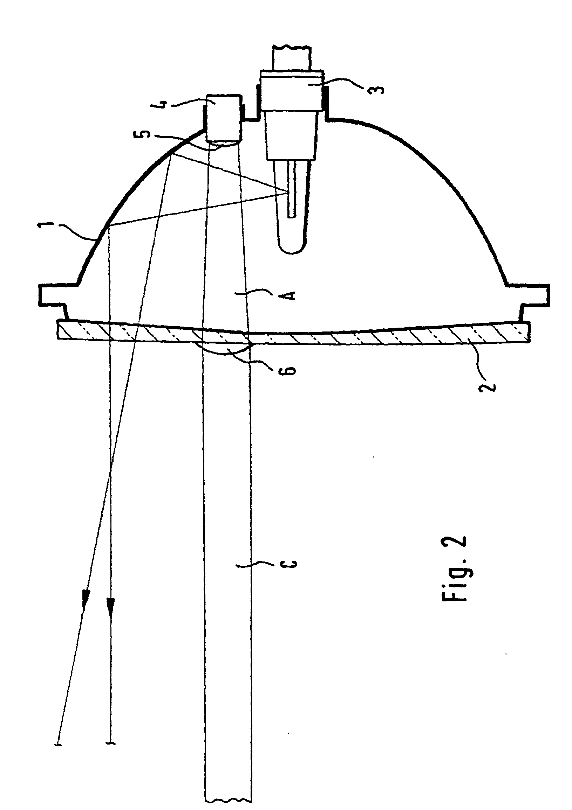

In dem in Figur 2 dargestellten Ausführungsbeispiel ist das Leuchtenglas 2 an der Stelle, an der der Signalstrahl durch das Lampenglas 2 tritt, zu einer Linse 6 ausgebildet, die die Wirkung der Optik 5 des Sende- und/oder Empfangsgeräts 4 ergänzt. Ein von dem Sende- und/oder Empfangsgerät 4 ausgesandter divergenter Strahl A kann durch die Linse 6 zu einem Strahl C mit einer anderen Divergenz überführt werden.

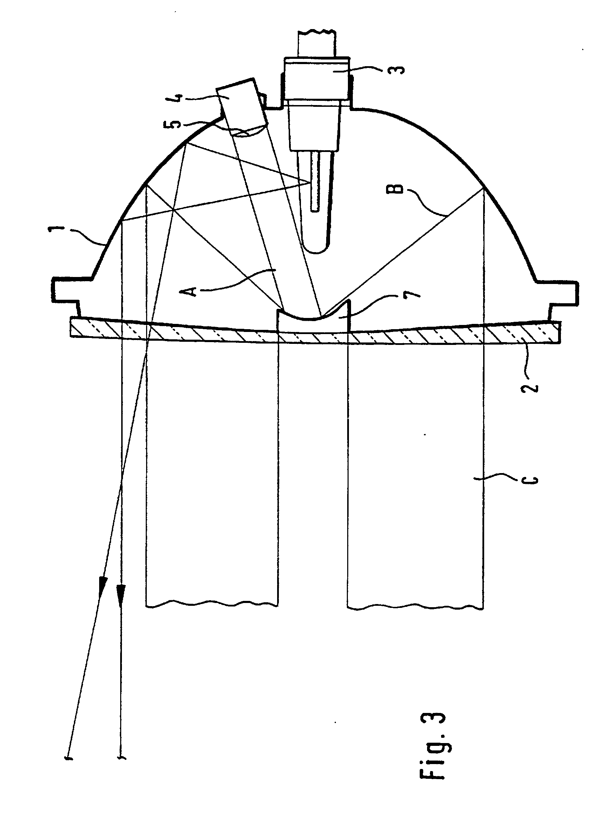

Bei dem in Figur 3 dargestellten Ausführungsbeispiel ist das Sende- und/oder Empfangsgerät 4 hier schräg so eingesetzt, daß sein ausgesandter Strahl A an einer Reflektionseinrichtung 7, die etwa in der optischen Achse der Lampe 3 angeordnet ist, reflektiert wird. Hierzu ist die Reflektionseinrichtung 7 mit einer Reflektionsfläche versehen, die eine Änderung der Ausbreitungsrichtung verursacht und der Strahlformung dient. In dem dargestellten Ausführungsbeispiel wird der ausgesandte Strahl A dabei durch eine zerstreuende Ausbildung der Reflektionseinrichtung 7 in einem Strahlkegel B aufgeweitet, der am Reflektor 1 zu einem breiten parallelen Strahl C reflektiert wird und durch das Leuchtenglas 2 austritt. In gleicher Weise wird ein eintretender Strahl C durch den Reflektor 1 und die Reflektionseinrichtung 7 auf die Optik 5 des Sende- und/oder Empfangsgeräts abgebildet.

Die in der optischen Achse angeordnete Reflektionseinrichtung 7 stört die Abstrahlung der Lampe 3 nicht, da in den meisten Fällen eine direkte Abstrahlung der Lampe 3, d.h. ohne eine vorherige Reflektion an dem Reflektor 1, gar nicht erwünscht ist und daher der in der optischen Achse liegende Bereich häufig abgeblockt wird.

Die dargestellten Ausführungsbeispiele lassen erkennen, daß durch die erfindungsgemäße Anordnung des Sende- und/oder Empfangsgeräts 4 in dem durch den Reflektor 1 und das Leuchtenglas 2 begrenzten Lampenraum eine Raum und Kosten sparende Anordnung ermöglicht ist, die eine Mehrfachausnutzung von in der Beleuchtungseinrichtung enthaltenen Teilen ermöglicht.

## Patentansprüche

1. Beleuchtungseinrichtung, die in einer Karosserie eines Kraftfahrzeugs befestigt ist, mit wenigstens einer Lampe und einem Reflektor in einem Lampenraum und einem, den Lampenraum nach außen abschließenden Leuchtenglas und mit einem Sende- und/oder Empfangsgerät zum Aussenden und/oder Empfangen spezieller Signalstrahlen, **dadurch gekennzeichnet, dass** der Lampenraum durch das Leuchtenglas (2) und den Reflektor (1) begrenzt ist und dass das Sende- und/oder Empfangsgerät (4) in dem Lampenraum der Beleuchtungseinrichtung so angeordnet ist, dass durch das Leuchtenglas (2) der spezielle Signalstrahl (A, B, C) aussendbar bzw. empfangbar ist.

2. Beleuchtungseinrichtung nach Anspruch 1, **dadurch gekennzeichnet, dass** das Sende- und/oder Empfangsgerät (4) eine eigene Optik (5) zur Formung des speziellen Signalstrahls aufweist.

3. Beleuchtungseinrichtung nach einem der vorhergehenden Ansprüche, **dadurch gekennzeichnet, dass** das Lampenglas (2) eine Linse (6) zur Formung des speziellen Signalstrahls (A, C) aufweist.

4. Beleuchtungseinrichtung nach Anspruch 3, **dadurch gekennzeichnet, dass** die Linse nur einen geringen Anteil der Fläche des Leuchtenglases (2) einnimmt.

5. Beleuchtungseinrichtung nach einem der vorhergehenden Ansprüche, **dadurch gekennzeichnet, dass** der vom Sende- und/oder Empfangsgerät (4) ausgesandte oder empfangene spezielle Signalstrahl (A, B, C) wenigstens teilweise auf den Reflektor (1) in dem Lampenraum gerichtet ist.

6. Beleuchtungseinrichtung nach Anspruch 5, **gekennzeichnet durch** eine zum Sende- und/oder Empfangsgerät (4) gerichtete Reflektionseinrichtung (7) im Lampenraum.

7. Beleuchtungseinrichtung nach Anspruch 6, **dadurch gekennzeichnet, dass** die Reflektionseinrichtung (7) auf der Fläche des Leuchtenglases (2) ausgebildet ist.

8. Beleuchtungseinrichtung nach Anspruch 6 oder 7, **dadurch gekennzeichnet, dass** die Reflektionseinrichtung (7) mit einer strahlbündelnden oder strahlzerstreuenden Reflektionsfläche versehen ist.

9. Beleuchtungseinrichtung nach einem der Ansprüche 6 bis 8, **dadurch gekennzeichnet, dass** die Reflektionseinrichtung (7) in der optischen Achse der Lampe (3) angeordnet ist und dass ihre Fläche klein gegen die Fläche des Leuchtenglases (2) ist.

10. Beleuchtungseinrichtung nach einem der vorhergehenden Ansprüche, **dadurch gekennzeichnet, dass** das Sende- und/oder Empfangsgerät (4) zum Aussenden und/oder Empfangen eines speziellen elektromagnetischen, vorzugsweise optischen Signalstrahls ausgelegt ist.

11. Beleuchtungseinrichtung nach Anspruch 10, **dadurch gekennzeichnet, dass** das Sende- und/oder Empfangsgerät (4) zum Aussenden und/oder Empfangen des elektromagnetischen Signalstrahls mit einem schmalen Frequenzband ausgelegt ist.

12. Beleuchtungseinrichtung nach Anspruch 10 oder 11, **dadurch gekennzeichnet, dass** das Sende- und/oder Empfangsgerät (4) zum Aussenden und/oder Empfangen eines modulierten elektromagnetischen Signals ausgelegt ist.

13. Beleuchtungseinrichtung nach einem der vorhergehenden Ansprüche, **dadurch gekennzeichnet, dass** an der Außenseite des den Lampenraum abschließenden Leuchtenglases (2) eine Reinigungseinrichtung angebracht ist.

14. Beleuchtungseinrichtung nach einem der vorhergehenden Ansprüche, **dadurch gekennzeichnet, dass** das Sende- und/oder Empfangsgerät (4) durch eine Bohrung des Reflektors (1) in den Lampenraum eingebracht ist.

## Claims

1. Lighting device which is fastened in a body of a motor vehicle, having at least one lamp and one reflector in a lamp space, and a lamp glass which seals off the lamp space from the outside, and having a transmitting and/or receiving unit for emitting and/or receiving special signal beams, **characterized in that** the lamp space is bounded by the lamp glass (2) and the reflector (1), and **in that** the transmitting and/or receiving unit (4) is arranged in the lamp space of the lighting device such that the special signal beam (A, B, C) can be emitted and/or received through the lamp glass (2).

2. Lighting device according to Claim 1, **characterized in that** the transmitting and/or receiving unit (4) has a dedicated optical system (5) for forming the special signal beam.

3. Lighting device according to one of the preceding claims, **characterized in that** the lamp glass (2) has a lens (6) for forming the special signal beam (A, C).

4. Lighting device according to Claim 3, **characterized in that** the lens takes up only a slight proportion of the area of the lamp glass (2).

5. Lighting device according to one of the preceding claims, **characterized in that** the special signal beam (A, B, C) emitted or received by the transmitting and/or receiving unit (4) is directed at least partially on to the reflector (1) in the lamp space.

6. Lighting device according to Claim 5, **characterized by** a reflection device (7) in the lamp space which is directed towards the transmitting and/or receiving unit (4).

7. Lighting device according to Claim 6, **characterized in that** the reflection device (7) is constructed on the surface of the lamp glass (2).

8. Lighting device according to Claim 6 or 7, **characterized in that** the reflection device (7) is provided with a beam-focusing or beam-scattering reflection surface.

9. Lighting device according to one of Claims 6 to 8, **characterized in that** the reflection device (7) is arranged on the optical axis of the lamp (3), and **in that** its area is small by comparison with the area of the lamp glass (2).

10. Lighting device according to one of the preceding claims, **characterized in that** the transmitting and/or receiving unit (4) is designed for emitting and/or receiving a special electromagnetic, preferably optical signal beam.

11. Lighting device according to Claim 10, **characterized in that** the transmitting and/or receiving unit (4) is designed for emitting and/or receiving the electromagnetic signal beam with a narrow frequency band.

12. Lighting device according to Claim 10 or 11, **characterized in that** the transmitting and/or receiving unit (4) is designed for emitting and/or receiving a modulated electromagnetic signal.

13. Lighting device according to one of the preceding claims, **characterized in that** a cleaning device is fitted on the outside of the lamp glass (2) sealing the lamp space.

14. Lighting device according to one of the preceding claims, **characterized in that** the transmitting and/or receiving unit (4) is inserted into the lamp space through a bore in the reflector (1).

## Revendications

1. Installation d'éclairage fixée à la carrosserie d'un véhicule automobile, comprenant au moins une lampe et un réflecteur dans l'enceinte de la lampe et une glace fermant l'enceinte de la lampe vis-à-vis de l'extérieur ainsi qu'un appareil d'émission et/ou de réception pour émettre et/ou recevoir des rayons de signaux spéciaux,
**caractérisée en ce que**
l'enceinte de la lampe est délimitée par la glace (2) du projecteur et le réflecteur (1), et l'appareil d'émission et/ou de réception (4) est logé dans l'enceinte de la lampe de l'installation d'éclairage pour permettre l'émission ou la réception du rayon de signal spécial (A, B, C) à travers la glace (2) du projecteur.

2. Installation d'éclairage selon la revendication 1,
**caractérisée en ce que**
l'appareil d'émission et/ou de réception (4) comporte son optique (5), propre, pour former le faisceau de signal spécial.

3. Installation d'éclairage selon l'une quelconque des revendications précédentes,
**caractérisée en ce que**
la glace (2) de la lampe comporte une lentille (6) pour former le faisceau de signal spécial (A, B, C).

4. Installation d'éclairage selon la revendication 3,
**caractérisée en ce que**
la lentille n'occupe qu'une faible partie de la surface de la glace (2) du projecteur.

5. Installation d'éclairage selon l'une quelconque des revendications précédentes,
**caractérisée en ce que**
le faisceau de signal spécial (A, B, C) émis ou reçu par l'appareil émetteur et/ou récepteur (4) est dirigé au moins en partie vers le réflecteur (1) dans l'enceinte de la lampe.

6. Installation d'éclairage selon la revendication 5,
**caractérisée par**
une installation de réflexion (7) placée dans l'enceinte de la lampe et dirigée vers l'appareil d'émission et/ou de réception (4).

7. Installation d'éclairage selon la revendication 6,
**caractérisée en ce que**
l'installation de réflexion (7) est réalisée sur la surface de la glace (2) du projecteur.

8. Installation d'éclairage selon l'une quelconque des revendications 6 ou 7,
**caractérisée en ce que**
l'installation de réflexion (7) est munie d'une surface de réflexion focalisant ou dispersant le faisceau.

9. Installation d'éclairage selon l'une quelconque des revendications 6 à 8,
**caractérisée en ce que**
l'installation de réflexion (7) est prévue dans l'axe optique de la lampe (3) et sa surface est petite par rapport à la surface de la glace (2) du projecteur.

10. Installation d'éclairage selon l'une quelconque des revendications précédentes,
**caractérisée en ce que**
l'appareil d'émission et/ou de réception (4) est conçu pour émettre et/ou recevoir un faisceau de signal spécial, électromagnétique, de préférence optique.

11. Installation d'éclairage selon la revendication 10,
**caractérisée en ce que**
l'appareil d'émission et/ou de réception (4) est conçu pour émettre et/ou recevoir un faisceau de signal électromagnétique ayant une bande de fréquence étroite.

12. Installation d'éclairage selon l'une quelconque des revendications 10 ou 11,
**caractérisée en ce que**
l'appareil d'émission et/ou de réception (4) est conçu pour émettre et/ou recevoir un signal électromagnétique modulé.

13. Installation d'éclairage selon l'une quelconque des revendications précédentes,
**caractérisée en ce qu'**
une installation de nettoyage est prévue sur la face extérieure de la glace (2) du projecteur fermant l'enceinte de la lampe.

14. Installation d'éclairage selon l'une quelconque des revendications précédentes,
**caractérisée en ce que**
l'appareil d'émission et/ou de réception (4) est logé dans le perçage du réflecteur (1) dans l'enceinte de la lampe.
